# EUROPEAN PATENT APPLICATION

(11) **EP 4 704 362 A1**
(43) Date of publication of application: **04.03.2026**
(21) Application number: 24197145.6
(22) Date of filing: 29.08.2024
(51) Int. Cl.: H04L 9/00

(54) **METHOD FOR SPECIFYING AN OWNERSHIP OF AN ASSET**

(71) Applicant: Siemens Aktiengesellschaft, 80333 München (DE)
(72) Inventor: REGNATH, Emanuel, 81249 München (DE); SINGH, Saurabh Narayan, 81739 München (DE); PRUMMER, Michael, 80639 München (DE); ORCHARD, Alastair, 16146 Genua (IT)
(74) Representative: Siemens Patent Attorneys

(57) **Abstract**

The invention relates to a computer-implemented method for specifying an ownership of an asset (A), wherein the asset (A) comprises one or more parts (P1, P2), wherein the one or more parts (P1, P2) comprise none, one or more subparts (SP1-SP5), wherein the method comprises:
- assigning a non-fungible token to the asset (A),
- assigning a non-fungible part token to each of the one or more parts (P1, P2), and
- assigning a non-fungible subpart token to each existing subpart (SP1-SP5),
wherein the non-fungible token, the non-fungible part tokens and the non-fungible sub-part tokens are stored in a database (DB) in a tree structure (BP), the tree structure (BP) defining the relations between the asset (A), the one or more parts (P1, P2) and the one or more subparts (SP1-SP5) and defining the corresponding relations between the non-fungible token, the non-fungible part tokens and the non-fungible subpart tokens.

## Description

The present invention relates to a method for specifying an ownership of an asset. Moreover, the invention relates to a computer program product comprising a program code for executing such a method. Further, the present invention relates to a system for specifying an ownership of an asset.

Ownership of a physical or digital asset or entity can be documented via conventional contracts or smart contracts that map the ownership of an asset to a non-fungible token (NFT). A non-fungible token is a cryptographically unique, indivisible, non-replaceable, and verifiable token which represents an asset in a database, in particular a distributed transactional database, such as for example the Ethereum blockchain. A non-fungible token can be used as a proof of entitlement to the asset which it represents. Entitlement may include ownership, licensee status, and the like. The conditions for transferring a non-fungible token and the entitlement certified thereby between entities is governed by an automated smart contract that is stored as a transaction in the distributed transactional database and that tracks ownership of the non-fungible token.

In an industrial context, a non-fungible token can be used as a digital twin that represents a physical or a digital asset or entity such as an Internet-of-Things device, a technical design or model, a manufacturing specification, data stream of designs and models, and the like, which is to be exchanged, delivered, shipped or the like in an automated and trusted manner, between different entities in an industrial ecosystem. Thus, the non-fungible token can be used, in general, as proof of ownership for the respective asset and can further be used for integrity verification, counterfeit detection, and proof of entitlement.

Most assets and objects that are subject to the concept of ownership consist of - or can be divided into - subparts that can stand for themselves as a new object and thus the ownership also applies to them. By default, the owner of an asset also owns all its subparts. However, parts of the full asset might change owner and for each such transaction, change of ownership needs to be documented for later verification.

Currently, the ownership of assets is documented using conventional contracts. The contracts specify additional ownership rules for subparts. For example, residential properties are often divided into units that are owned by individual landlords. Any change of ownership is written as an additional line into the land register by a notary. In order to determine the owner of a given unit, one has to search for the latest valid entry in the land registry.

A new trend is the documentation of ownership, in particular ownership of assets, using smart contracts on a distributed ledger (e.g., Blockchain), which tracks the ownership of assets using tokens. As described above, these tokens may be non-fungible tokens (NFT). NFTs represent a digital twin of an asset and provide the owner an opportunity to create new business models by selling or transferring it to another user in the ecosystem.

It should be noted that independent of the grammatical term usage, individuals with male, female or other gender identities are included within the term (for example user, owner, or creator).

As for now, each asset that can have an owner is encoded as individual NFT. Subparts of an asset must therefore also be specified as individual NFTs. This approach becomes inefficient for tracking ownership of assets that are composed of many subparts. For transferring the entire asset, it would be required to transfer all subparts individually. In the context of NFTs, this causes additional costs as every transaction requires a small fee to be paid. Further, as many transactions are required when transferring an asset with many subparts, such a transfer may be more prone to human errors, requires the full knowledge of all tokens of all subparts and is more time and computing capacity consuming. Furthermore, when not all subparts of an asset have their own token but are combined as one single asset, a transfer of individual subparts cannot be easily achieved.

Thus, it is one object of the present invention to provide an easy and reliable way of specifying the ownership of assets that consist of individual subparts and of transferring and verifying such an ownership.

According to a first aspect, a computer-implemented method for specifying an ownership of an asset is provided. The asset comprises one or more parts. Each of the one or more parts may comprise none, one or more subparts. As described above, an asset may be any physical or digital entity such as a component of a technical system, a technical device or system, an Internet-of-Things device, a technical design or model, a manufacturing specification, data stream of designs and models, and the like, which is to be exchanged, delivered, shipped or the like in an automated and trusted manner between different entities in an industrial ecosystem.

As an example of a physical entity, the physical entity may be for example a technical device such as a car which consists of several parts, such as engine, wheel set, chassis, etc. Some of the parts may in turn consist of several subparts, for example the wheel set may consist of four wheels.

Thus, in the herein described method, it is assumed that the asset consists not only of one single asset but consists of one or more parts which, in turn, may comprise subparts. It should be noted that not all of the parts of the asset need to include subparts.

In order to be able to have a digital representation of the ownership of the asset and its parts and/or subparts, the method comprises:
- assigning a non-fungible token to the asset,
- assigning a non-fungible part token to each of the one or more parts, and
- assigning a non-fungible subpart token to each existing subpart.

It should be noted that, when none of the parts has further subparts, the last step of assigning a non-fungible subpart token to a subpart may be omitted. Further, the structure of the asset may be extended by adding further levels, i.e., by adding further subparts to a subpart, which may be done for each level of the tree structure. Thus, the tree structure may include a finite number of parts, subparts, subparts depending on the subparts, further subparts depending on the subparts of the subparts, and so on. To each existing part, subpart or subpart of a subpart, a non-fungible token may be assigned as described above.

In the above-mentioned method, the asset itself as well as all its parts and subparts have their own non-fungible token. However, in contrast to previous approaches, in which a standard non-fungible token (NFT) has been assigned to the asset as a whole without individually specifying the further parts and subparts of the asset, the herein described method assigns non-fungible tokens to the asset as well as its parts and subparts. The tokens of the asset, the parts and optional the subparts (when existing) have a relation to each other which corresponds to the relation of the asset and its parts and subparts.

For this purpose, the non-fungible token, the non-fungible part tokens and the non-fungible sub-part tokens are stored in a database in a tree structure, the tree structure defining the relations between the asset, the one or more parts and the one or more subparts and defining the corresponding relations between the non-fungible token, the non-fungible part tokens and the non-fungible subpart tokens.

Based on this tree-structure, it is possible to have access, for example for a transfer transaction, not only to the asset as a whole with all its parts, but also the individual parts and subparts may be accessed, for example transferred, individually. At the same time, as the relationship between the asset and its parts and subparts as well as the corresponding tokens is stored in the database, any change of ownership of the asset, its parts and subparts is indicated in the database in the tree structure of the asset. Thus, when the asset itself is changed, e.g., transferred to another owner, this change reflects to all parts and subparts being dependent on the asset due to the tree structure without the need to transfer all tokens of all parts and subparts. This provides an easy way, which requires less time and computing resources, for specifying and managing the ownership of an asset as well as its parts and subparts.

In particular, the various "non-fungible tokens" may be tokens that are managed by, comprised by, or stored in, a smart contract, the smart contract being a specifically programmed smart transaction that is stored in the database.

More particularly, for example, the non-fungible tokens may be tokens according to one of the Ethereum standards ERC-721, ERC-777, and ERC-1155, however, with the modifications as described herein (i.e., including relations to parent and children tokens).

It is noted that the above-mentioned steps do not necessarily need to be performed in this order and can also be performed in reversed or any other order and/or simultaneously, depending on further details of implementation.

In an embodiment, the tree structure of the asset may be defined prior to assigning the various non-fungible tokens. For example, the method may further comprise creating a blueprint defining the tree structure of the asset. For each asset, a specific blueprint may be defined taking into account the specific structure of the respective asset.

According to an embodiment, the non-fungible token indicates an identifier of the asset (more specific of the respective token), an identifier of the owner of the asset, and an identifier of a parent node and/or an identifier of a child node within the tree structure. Each of the non-fungible part tokens indicates an identifier of the respective part (more specific of the respective token), an identifier of the owner of the respective part, and an identifier of a parent node and/or an identifier of a child node within the tree structure, and each of the non-fungible subpart tokens indicates an identifier of the respective subpart (more specific of the respective token), an identifier of the owner of the respective subpart, and an identifier of a parent node and/or an identifier of a child node within the tree structure.

It should be noted that each of the tokens may indicate an identifier of a parent node and/or an identifier of a child node. When an identifier for the parent node and the child node is indicated, this may provide comprehensive information regarding the tree structure within each token.

The identifiers may be included in the non-fungible (part or subpart) tokens for example in the form of strings or integers, e.g., are included in a structure of the token defining specific identifies fields.

It should be noted that in the following, the identifier of the token is identical to the identifier of the respective asset, part, or subpart. This means that, when an identifier is assigned to a token, this identifier also identifies the corresponding asset, part, or subpart.

Based on the different identifiers, each non-fungible token may clearly define the relationship to other non-fungible tokens within the tree structure and thus the relationship between the corresponding asset, part(s), and subpart(s). Thus, the non-fungible token of the asset defines the children of this token, i.e., the parts contained in the asset. Accordingly, the non-fungible part token(s) define the corresponding children of the non-fungible part token and thus the subparts of the respective part. If a part has no subparts, the non-fungible part token specifies that there are no children. Similarly, the non-fungible part token specifies the parent node and thus the asset in which the corresponding part is contained. Further, the non-fungible subpart tokens specify the children and parent nodes and thus specify further subparts (when existing) and the part in which the respective subpart is contained. This structure may be extended depending on the number of subpart layers. When a non-fungible (part or subpart) token has no child node and thus the respective asset, part or subpart does not contain any further elements (parts or subparts), the respective field may be empty or may be set to "none". The same applies to parent nodes.

According to a further embodiment, the identifier of the asset, the identifiers of the parts and the identifiers of the subparts may correspond to unique identifiers identifying the asset, the one or more parts and the one or more subparts. Such a unique identifier may be for example a universally unique identifier or a cryptographic hash value.

A "cryptographic hash value" is a hash value that is calculated by applying a cryptographic hashing algorithm that relies on the avalanche effect, thus ensuring that even a small change in input data leads to a vastly different hash value. Examples of cryptographic hash algorithms include MD-5 and SHA.

It should be noted that in the following, several entities are used:
- Smart contracts, which store, track, and manage ownership information of assets on a computational distributed database, such as the Ethereum blockchain.
- Entities (processing entities which may be receiving or transmitting entities) that interact with the smart contracts through their wallet and can have the roles of a creator or an owner of an asset/part/subpart. Herein, a wallet may comprise a unique identifier (wallet address) and a cryptographic public-private key pair that can be used to prove ownership of the wallet and to unlock the wallet for performing transactions.
- Blueprints that specify the relations between parts of the asset in a tree structure (as described above).
- Non-fungible tokens (NFTs) of assets, which correspond to NFT as commonly used.
- Non-fungible part tokens (part NFTs) and non-fungible subpart tokens (subpart NFTs), as described above, that define a recursive data structure to represent the ownership of parts and subparts of an asset as NFT. The links between individual part NFTs and subpart NFTs may be created according to the blueprint.

The basic data structure of a part NFT or subpart NFT may be defined as follows:

```
 Struct (sub)part NFT {
        ID: string,
        parentID: string
        childrenlDs: List<string>
        owner: string,
        creator: string,
        }
```

According to a further embodiment, the identifier of the asset, the identifiers of the parts and the identifiers of the subparts each specify a token identifier, a smart contract address and/or a blockchain identifier. Thus, according to this embodiment, the identifier (ID in the above structure) of the asset, the identifiers (ID in the above structure) of the parts and the identifiers (ID in the above structure) of the subparts does not only contain a single identifier but may comprise a combination of identifiers. In this case, the combination of identifiers may be for example the cryptographic address of a smart contract that identifies the smart contract in the ledger of the (distributed transactional) database; and a token ID of the specific non-fungible token inside the smart contract. In addition, the identifier ID may contain an identifier of the blockchain in which the non-fungible token is stored. This may provide the advantage that the respective token may be clearly identified also when being stored in different contracts or blockchains.

For instance, if the non-fungible token is stored in the same smart contract, the identifier ID of the asset/part/subpart may be solely the token ID. If the non-fungible token is stored in a different smart contract but in the same blockchain, the identifier ID may be the token ID in combination with the address of the smart contract. If the non-fungible token is stored in a different smart contract and a different blockchain, the identifier ID may be the token ID in combination with the address of the smart contract and the identifier of the blockchain. Thus, each non-fungible token may be uniquely identified, also when stored in different smart contracts and/or blockchains.

According to a further embodiment, the owner identifier corresponds to a wallet address of a user owning the asset, the one or more parts, and/or the one or more subparts.

In addition to the owner of the non-fungible token and the respective part, subpart, or asset, also the creator of the non-fungible token may be included in the asset/part/subpart identifier. The owner and/or creator may be specified as the wallet addresses of the users that have the role of owner or creator.

Using the above-mentioned method, it is possible to create a smart contract for an asset having parts and/or subparts. This process may be used by a creator who wants to offer/sell an asset as a non-fungible token (NFT) with the ability to transfer parts of it.
1. Upload subparts: The creator may upload the data of any part or subpart of an asset that should be bound to an NFT to a decentralized storage, such as IPFS. For each element of the asset, i.e., the asset itself as a whole, the individual parts and the optional individual subparts, a unique identifier is derived that identifies the asset, part and/or subpart, such as a UUID or cryptographic hash value.
2. Create blueprint: The blueprint specifies the tree structure of the overall asset. The leaves are atomic (sub)parts without children. The intermediate nodes are made from leaves and may or may not have data with an identifier attached to them. Any data format may be used for the blueprint that is suitable to specify the tree structure.
3. Deploy smart contract: The creator deploys a smart contract on a blockchain. For each identifier of the asset (also called asset ID), identifier of a part or subpart (in the following called token ID), there is also the parent identifier and a list of children identifiers stored. The code of the smart contract implements a logic to assign a parent identifier and children identifier according to the blueprint when an NFT is minted.

Herein, "minting" a non-fungible token may comprise performing a transaction using the (distributed transactional) database that causes the non-fungible token to be created and to be associated with a transmitting entity as its initial owner. For example, during said "minting", a token id of a smart contract adhering to ERC-1155 may be assigned to a wallet address of a wallet of the transmitting entity. The step of "minting" is performed, in particular, when a transmitting entity is a creating entity that has created the asset and a non-fungible token representing the asset is not yet stored in the distributed transactional database.

This minting process may be used by a buyer who wants to create one new instance of the asset represented by one or multiple part or subpart NFTs and become the owner of these part or subpart NFTs (and thus the respective parts or subparts). The minting process may comprise:
1. Send Transaction: A user that wants to become the owner of a part or subpart N FT, sends a transaction to the smart contract specifying the identifier of the asset that should be minted. The transaction might also send some conventional crypto tokens paying the mint operation.
2. Assign token identifier: The smart contract will add all required token identifier (i.e., the identifiers of the asset, the parts, and the subparts) to the list of minted token identifiers and assign the new owner to them. The individual steps are:
   a. Create a new token identifier for each node in the blueprint tree structure.
   b. Assign parent identifiers and children identifiers according to the blueprint tree.
   c. Assign the owner to the token identifier of the root node (i.e., the asset) of the tree.
   d. Set all other owner fields to "inherit"

According to a further embodiment, the method further comprises verifying the owner of a part or subpart of the asset by verifying the owner identifier included in the respective non-fungible part token or non-fungible subpart token. In a further embodiment, verifying the owner identifier corresponds to directly verifying the owner identifier if the owner identifier is included in the respective non-fungible part token or non-fungible subpart token, or corresponds to verifying the owner identifier of the parent node of the respective non-fungible part token or non-fungible subpart token if the owner identifier is not directly included in the respective non-fungible part token or non-fungible subpart token but refers to the respective parent node. As described above, when the owner of a part or subpart is the same as the owner of the higher-level part or asset, the owner may be included in the respective token only by setting the owner field to "inherit". In this case, the owner may be verified by identifying the owner in a first step using the higher-level node in the tree structure. This provides the advantage that only necessary fields of the nodes (tokens) in the tree structure have to be filled (thus saving storage) as all other information may be retrieved by using the remaining information of the tree structure, i.e., of the higher-level nodes. However, when the owner of one part or subpart is different than the owner of the higher-level node (token), the field of the respective token may be filled, and the owner address may be directly used for verifying the owner.

The method may further comprise verifying the owner of the asset by verifying the owner identifier of the parts or subparts of the asset. As the ownership of the asset depends on the ownership of the parts and/or subparts of the asset, the owner of the asset may be verified by verifying the owner of the dependent parts and/or subparts. The same applies when an owner of a part needs to be verified. In this case, the method may comprises verifying the owner of a part of the asset by verifying the owner identifier of the subparts of the part of the asset. In any case, for verifying the owner of any element of the asset, the owner of all dependent elements of this element needs to be verified.

An exemplary process of verifying the ownership of a (sub)part NFT is described as follows. This process may be used to verify that a subpart NFT and all its descendants belong to a certain owner.
1. Verify subpart NFT itself: The owner of a subpart NFT is determined by the following steps.
   a. If the owner field of the subpart NFT is set to an address, verify that this address is the address of the owner.
   b. If the owner field of the subpart NFT is set to "inherit", move to the parent subpart NFT identified by the parent identifier. Repeat step 1 until the current owner is determined.
2. Verify children: For full ownership, all children need to belong to the owner as well. Starting from the subpart NFT in question, iterate over all children and reapply this process on them. If a subpart NFT has no children, the ownership verification of children is not applicable.

According to a further embodiment, the method further comprises transferring the ownership of a part or subpart of the asset by issuing a transfer transaction of a respective non-fungible part token or non-fungible subpart token, verifying the current owner identifier of the respective part or subpart and assigning a new owner to the respective part or subpart by changing the owner identifier within the respective non-fungible part token or non-fungible subpart token. Thus, in contrast to previous systems and methods, it is possible to change the ownership of a dependent element of an asset to another owner, without transferring the whole asset to another owner. Further, it is possible to change the owner of an element of the asset even in case this element has further dependent elements. For example, one part of the asset may be transferred to another owner, wherein the part has several subparts.

An example of transferring the ownership of a subpart NFT is shown in the following. This process may be used by an owner who wants to transfer a part or a subpart NFT and all its children to a new owner.
1. Send transfer: The current owner (sender) sends a transfer transaction of a specific subpart NFT to the smart contract. The subpart NFT is identified by its identifier. The new owner (receiver) is identified by its wallet address. Optional a new parent identifier can be specified.
2. Verify full ownership: The smart contract checks whether the sender is the full owner of the subpart NFT that should be transferred. The verification may be done as described above for verifying the ownership of a (sub)part NFT.
3. Assign new owner: If given, set the parent identifier of the subpart NFT to the parent identifier specified in the transaction. If the parent subpart NFT is owned by the new owner, set the owner of the subpart NFT to "inherit". Else, set the owner of the subpart NFT to the address of the new owner.

According to a further aspect, the invention relates to a computer program product comprising a program code for executing the above-described method for specifying the ownership of an asset when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Herein, respective portions of the program code may be run on respective entities, such as a processing entity as described below, or any entities of a (distributed transactional) database.

According to a further aspect, a system for specifying an ownership of an asset is provided, wherein the asset comprises one or more parts, wherein the one or more parts comprise none, one or more subparts. The system comprises at least one processing entity and a database, wherein the at least one processing entity is configured to:
- assign a non-fungible token to the asset,
- assign a non-fungible part token to each of the one or more parts, and
- assign a non-fungible subpart token to each existing subpart.

As described above, the non-fungible token, the non-fungible part tokens and the non-fungible sub-part tokens are stored in the database in a tree structure, the tree structure defining the relations between the asset, the one or more parts and the one or more subparts.

The term "entity" may refer to any entity that is capable of performing transactions using the database. Examples of transactions include minting the non-fungible token; transferring ownership of the non-fungible token to a different entity; and the like as described above.

The respective entity may own or comprise or have access to a wallet for use with the database. Herein, a wallet may comprise a unique identifier (wallet address) and a cryptographic public-private key pair that can be used to prove ownership of the wallet and to unlock the wallet for performing transactions.

The respective entity may comprise a node device of the database (may be a "full node"). Alternatively, the respective entity may only comprise the public-private key pair of the wallet (may be a "lightweight node"). Yet alternatively, an external device may be provided that is a full or lightweight node device of the database. Herein, the respective entity may use authenticated API calls or the like to the external device in order to access and perform transactions in the database.

For example, the processing entity may be an entity of an industrial control system and may be a transmitting entity or a receiving entity.

More particularly, the respective "entity" may be a unit, such as a structural or functional unit of a respective industrial control device of the industrial control system.

The respective entity may operate autonomously in a fully automated manner according to a predetermined program or may operate in an automated manner in response to operations performed by a human operator on the respective entity.

The respective entity may be implemented in hardware and/or in software. If said entity is implemented in hardware, it may be embodied as a device, e.g., as a computer or as a processor or as a part of a system, e.g., a computer system. If said entity is implemented in software it may be embodied as a computer program product, as a function, as a routine, as a program code or as an executable object.

The transmitting entity may represent for example "the owner" of the asset which may mean that the transmitting entity is entitled to use the asset for at least a certain purpose; and may mean that the transmitting entity has access to the multiple tokens that represent the asset.

It should be noted that the specifics of entitlement of the transmitting entity may be specified in the non-fungible tokens and/or may be enforced by a smart contract that provides the non-fungible tokens. Furthermore, the non-fungible tokens may comprise a wallet address of the transmitting entity, thereby designating the transmitting entity as its owner. The transmitting entity may possess a private key that is capable of unlocking said wallet in order to prove its ownership and/or to effect transactions of the non-fungible tokens.

According to an embodiment, the database is a distributed transactional database.

In particular, the distributed transactional database may maintain a cryptographically secured ledger of transactional data. For example, the cryptographically secured ledger may be a chain of blocks, wherein each block comprises a number of transactions, a cryptographic proof, such as a proof of work or a proof of stake, and a cryptographic hash value of the preceding block. In this way, later modifications of the ledger may become impossible or prohibitively expensive in term of required computing power.

Furthermore, the distributed transactional database may be embodied by a plurality of node devices interconnected by a network. Different node device may be operated by different industrial parties having limited trust in each other. Each node device may store a complete copy of the ledger. A consensus scheme may be used to govern the addition of new transactions to the ledger while securing integrity of the ledger, thus keeping the different copies of the ledger stored on the different node devices consistent with each other. The consensus scheme may be designed such that consistent behavior of each of the node device is rewarded, while inconsistent behavior of individual node devices is penalized and/or made impossible. Proof-of-Work and Proof-of-Stake are two well-known consensus schemes which ensure that no individual party can manipulate the cryptographically secured ledger without colluding with at least more than 50 % of the computing power and/or staked value that is invested into the distributed transactional database.

Thus, the distributed transactional database may also be referred to as being a Blockchain.

The embodiments and features described with reference to the method of the first aspect also apply mutatis mutandis to the system of the present aspect.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a sequence of steps of a method for specifying an ownership of an asset;
- Fig. 2: shows a schematic block diagram of a system for implementing the method of Fig.1;
- Fig. 3: shows a tree structure of an asset; and
- Fig. 4: shows a tree structure of the asset of Fig. 3 after changing the ownership of a subpart of the asset.

In the Figures, like reference numerals designate like or functionally equivalent elements, unless otherwise indicated.

Ownership of any technical entity, such as a physical or digital asset or entity, can be documented via smart contracts that map the ownership of an asset to a non-fungible token (NFT). Such an asset may consist of several elements (in the following called parts which may consist of several subparts). In order to be able to manage the ownership of such an asset, or of the parts or subparts of the asset, a method may be used which is able to specify not only the ownership of the asset as a whole but which is able to manage the dependencies of ownership within the elements of the asset, i.e., the ownership of all parts and subparts of the asset.

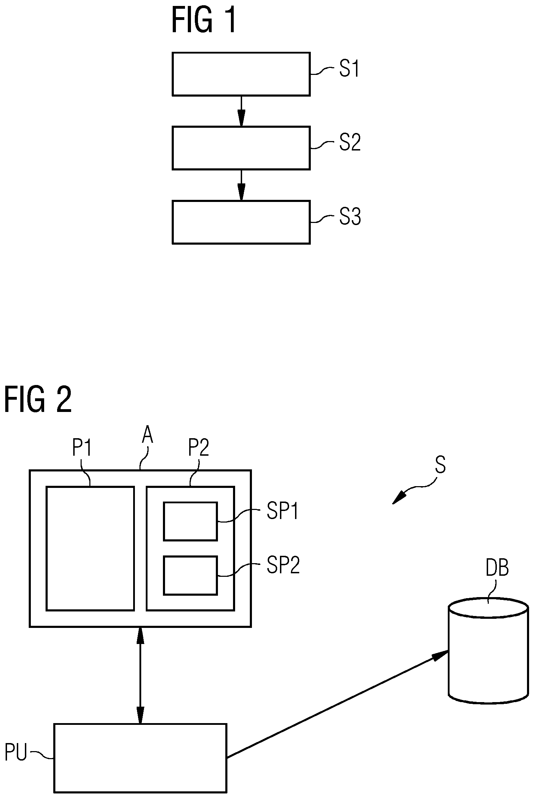

Such a method is shown in Fig. 1, whereas Fig. 2 shows a corresponding system S. As can be seen in Fig. 2, an asset A comprises several parts P1, P2, in the shown embodiment two parts. In the exemplary embodiment, part P2 comprises four subparts SP1-SP4. It should be noted that any number of parts and subparts is possible and that there may also exist further subparts being dependent on the subparts SP1-SP4, adding a further hierarchy layer.

A processing entity PU may create non-fungible tokens for the asset A, the parts P1, P2 and the subparts SP1-SP4 by using the method of Fig. 1.

In a first step S1, a non-fungible token is assigned to the asset A. In a second step S2, a non-fungible part token is assigned to each of the one or more parts P1, P2, and in a third step S3, a non-fungible subpart token is assigned to each of the one or more subparts SP1-SP4. When no subparts exist, the last step may be omitted. Further, additional steps of assigning a token may be added when there are further levels of subparts.

The non-fungible token, the non-fungible part tokens and the non-fungible sub-part tokens are stored in a database DB in a tree structure. The database DB may be in particular a distributed transactional database. The tree structure defines the relations between the asset A, the one or more parts P and the one or more subparts SP1-SP4 and defines the corresponding relations between the non-fungible token, the non-fungible part tokens and the non-fungible subpart tokens.

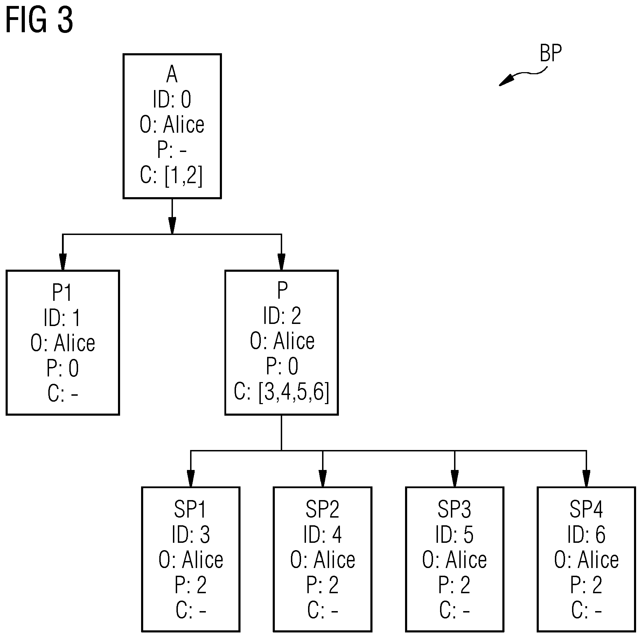

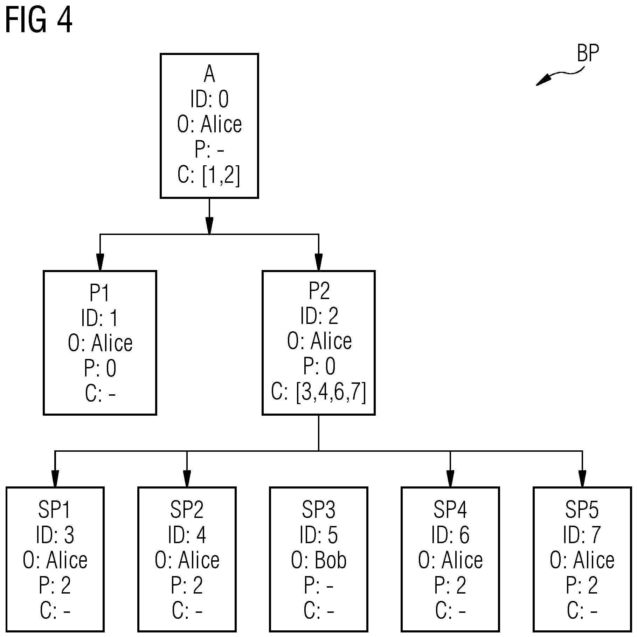

The tree structure, in the following called blueprint BP, as well as the corresponding dependencies of the tokens will be described with reference to Figs. 3 and 4. In the context of Figs. 3 and 4, two users Alice and Bob own different parts of an asset "car" that was created by a creator Carl. It should be noted that the users may also be represented by technical entities, such as the processing unit PU of Fig. 2.

First, creator Carl creates a smart contract and assigns the different tokens to the asset A, in this example the car, the parts P1 (in this example an engine), P2 (in this example a wheelset) and the subparts SP1-SP4 (in this example wheels of the wheelset P2). Thus, the tree structure BP of the car specifies the following parts:
- The entire car A consists of one engine P1 and a set of wheels P2.
- The set of wheels consists of four wheels SP1 to SP4.

Next, Alice buys and mints the non-fungible tokens of the entire car A. She sends a transaction for minting the asset "car" A to Carl's smart contract. The asset A is identified by its asset identifier. This will create seven token identifiers ID: 0 for the car A, 1 for the engine P2, 2 for the set of wheels P3, and 3-6 for the 4 wheels SP1-SP4. Only the token identifier 0 for the car A will be assigned to Alice as the owner O. All other owners O of the token identifiers ID may be set to "inherit". Alternatively, as shown in Fig. 3, the owner O may be set to "Alice".

As can be seen in the blueprint BP of Fig. 3, each of the tokens also defines the parent nodes P and child nodes C. When no parent or child node exists, the respective field is set to "none". For identifying the parent and child nodes, the ID of the respective token may be used.

It is now assumed that one of the subparts SP3 should be exchanged with a different subpart SP5 (see Fig. 3). This subpart SP5 may be a wheel, which is bought and minted by Bob. The wheel SP5 gets the token identifier ID=7 as the next free token identifier.

Now Alice wants to replace one of her wheels (e.g., SP3) with the wheel SP5 from Bob. First, she sends a transfer transaction for token identifier ID 5 to Carl's contract. She specifies Bob as the new owner. Since the subpart NFT with token identifier 5 has no children and the first parent subpart NFT where the owner is not set to "inherit" (in this case asset A) is owned by Alice, the transfer is accepted. Bob is set as the new owner (O: Bob), the parent identifier P is removed, and the wheel SP3 is removed from the children list of the wheel set P2.

Afterwards, Bob sends a transfer transaction for wheel SP5 to Carl's contract, i.e., the contract of the creator. He specifies Alice as new owner and - according to Alice preference - the new parent identifier P to token identifier ID 2. Since Alice owns token identifier ID 2, the owner O of the wheel SP5 may be set to "inherit".

The described approach is flexible and requires only a minimum number of ownership specifications, while at the same time allows very detailed ownership assignments. Note that the number ownership specifications do not increase with an increasing number of subparts as by default only the root part is assigned to an owner. Using a smart contract, everyone can verify the ownership of each individual node. The particular advantages are:
- Minimum minting operations (minting a subpart NFT with children means that all children will be minted as well within the same operation. Conventional NFTs would need to call the mint operation for each individual token identifier).
- No bulk transfers of NFTs (a similar functionality is the bulk transfer of tokens as it is implemented in e.g., ERC1155. The present approach is not relying on the bulk transferring of all single tokens, just the single root subpart NFT will change ownership. When transferring a subpart NFT, the ownership of all children will also change when their owner is set to "inherit". Overall, this reduces the number of assignments and computational effort for the smart contract).
- Full flexibility of ownership assignments (another difference to previous NFT structures is the flexible tree structure of the grouped NFTs. Using parent and children identifiers allows to model complex asset structures with their dependencies. At any level of the tree structure, the ownership can be changed.
- Internal part structure represented by NFT (since the asset structure is replicated by the subpart NFT, any additional recording keeping of which subparts belong to an asset is not needed).

### List of Reference

- A: asset
- BP: bluepring/tree structure
- C: children
- DB: database
- ID: token identifier (corresponding to asset, part, and subpart identifier)
- O: owner
- P: parent
- P1, P2: part
- PU: processing entity
- SP1-SP4: subpart
- S1-S3: method steps

## Claims

1. A computer-implemented method for specifying an ownership of an asset (A), wherein the asset (A) comprises one or more parts (P1, P2), wherein the one or more parts (P1, P2) comprise none, one or more subparts (SP1-SP5), wherein the method comprises:
- assigning a non-fungible token to the asset (A),
- assigning a non-fungible part token to each of the one or more parts (P1, P2), and
- assigning a non-fungible subpart token to each existing subpart (SP1-SP5),
wherein the non-fungible token, the non-fungible part tokens and the non-fungible sub-part tokens are stored in a database (DB) in a tree structure (BP), the tree structure (BP) defining the relations between the asset (A), the one or more parts (P1, P2) and the one or more subparts (SP1-SP5) and defining the corresponding relations between the non-fungible token, the non-fungible part tokens and the non-fungible subpart tokens.

2. The method according to claim 1, **characterized in that**
the non-fungible token indicates an identifier (ID) of the asset (A), an identifier (O) of the owner of the asset (A), and an identifier (P) of a parent node and/or an identifier (C) of a child node within the tree structure (BP),
each of the non-fungible part tokens indicates an identifier (ID) of the respective part (P1, P2), an identifier (O) of the owner of the respective part (P1, P2), and an identifier (P) of a parent node and/or an identifier (C) of a child node within the tree structure (BP), and
each of the non-fungible subpart tokens indicates an identifier (ID) of the respective subpart (SP1-SP5), an identifier (O) of the owner of the respective subpart (SP1-SP5), and an identifier (P) of a parent node and/or an identifier (C) of a child node within the tree structure (BP).

3. The method according to claim 2, **characterized in that** the owner identifier (O) corresponds to a wallet address of a user owning the asset (A), the one or more parts (P1, P2), and/or the one or more subparts (SP1-SP5).

4. The method according to claim 2 or 3, **characterized in that** the identifier (ID) of the asset (A), the identifiers (ID) of the parts (P1, P2) and the identifiers (ID) of the subparts (SP1-SP5) correspond to unique identifiers identifying the asset (A), the one or more parts (P1, P2) and the one or more subparts (SP1-SP5).

5. The method according to any one of the claims 2 to 4, **characterized in that** the identifier (ID) of the asset (A), the identifiers (ID) of the parts (P1, P2) and the identifiers (ID) of the subparts (SP1-SP5) each specify a token identifier, a smart contract address, and/or a blockchain identifier.

6. The method according to any one of the claims 2 to 5, **characterized in that** the method further comprises verifying the owner of a part (P1, P2) or subpart (SP1-SP5) of the asset (A) by verifying the owner identifier (O) included in the respective non-fungible part token or non-fungible subpart token.

7. The method according to claim 6, **characterized in that** verifying the owner identifier (O) corresponds to directly verifying the owner identifier (O) if the owner identifier (O) is included in the respective non-fungible part token or non-fungible subpart token, or corresponds to verifying the owner identifier (O) of the parent node of the respective non-fungible part token or non-fungible subpart token if the owner identifier (O) is not directly included in the respective non-fungible part token or non-fungible subpart token but refers to the respective parent node.

8. The method according to any one of the claims 2 to 7, **characterized in that** the method further comprises verifying the owner of the asset (A) by verifying the owner identifier (O) of the parts (P1, P2) or subparts (SP1-SP5) of the asset (A).

9. The method according to any one of the claims 2 to 8, **characterized in that** the method further comprises verifying the owner of a part (P1, P2) of the asset (A) by verifying the owner identifier (O) of the subparts (SP1-SP5) of the part (P1, P2) of the asset (A).

10. The method according to any one of the claims 2 to 9, **characterized in that** the method further comprises transferring the ownership of a part (P1, P2) or subpart (SP1-SP5) of the asset (A) by issuing a transfer transaction of a respective non-fungible part token or non-fungible subpart token, verifying the current owner identifier (O) of the respective part (P1, P2) or subpart (SP1-SP5) and assigning a new owner to the respective part (P1, P2) or subpart (SP1-SP5) by changing the owner identifier (O) within the respective non-fungible part token or non-fungible subpart token.

11. The method according to any one of the preceding claims, **characterized in that** the method further comprises creating a blueprint defining the tree structure (BP) of the asset (A).

12. A computer program product comprising a program code for executing the method of any one of the preceding claims when run on at least one computer.

13. A system (S) for specifying an ownership of an asset (A), wherein the asset (A) comprises one or more parts (P1, P2), wherein the one or more parts (P1, P2) comprise none, one or more subparts (SP1-SP5), the system comprising at least one processing entity and a database (DB), wherein the at least one processing entity is configured to:
- assign a non-fungible token to the asset (A),
- assign a non-fungible part token to each of the one or more parts (P1, P2), and
- assign a non-fungible subpart token to each existing subpart (SP1-SP5),
wherein the non-fungible token, the non-fungible part tokens and the non-fungible sub-part tokens are stored in the database (DB) in a tree structure (BP), the tree structure (BP) defining the relations between the asset (A), the one or more parts (P1, P2) and the one or more subparts (SP1-SP5) and defining the corresponding relations between the non-fungible token, the non-fungible part tokens and the non-fungible subpart tokens.

14. The system according to claim 13, **characterized in that** the database (DB) is a distributed transactional database.
